(19)

Europäisches
Patentamt
European
Patent Office
Office européen
des brevets

(11) **EP 4 407 563 A1**

(12) **EUROPEAN PATENT APPLICATION**
published in accordance with Art. 153(4) EPC

(43) Date of publication:
**31.07.2024 Bulletin 2024/31**

(21) Application number: **22909642.5**

(22) Date of filing: **24.11.2022**

(51) International Patent Classification (IPC):
**G06T 17/05** (2011.01)

(52) Cooperative Patent Classification (CPC):
**G06F 16/29; G06T 7/70; G06T 7/80; G06T 17/05;
G06V 10/44; G06V 10/74; G06V 10/80**

(86) International application number:
**PCT/CN2022/133941**

(87) International publication number:
**WO 2023/116327 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021 CN 202111584656**

(71) Applicant: **Huawei Technologies Co., Ltd.
Shenzhen, Guangdong 518129 (CN)**

(72) Inventor: **SHI, Zhaoyang
Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **MULTI-TYPE MAP-BASED FUSION POSITIONING METHOD AND ELECTRONIC DEVICE**

(57)     A fusion positioning method based on a multi-type map is provided and includes: obtaining a target image to be positioned; obtaining a target location at which the target image is photographed; determining, in a map database including a plurality of different types of map data, target map quality of a map located at the target location; determining a target positioning manner from a plurality of different preset positioning manners based on the target map quality, where the target positioning manner includes a basic positioning manner corresponding to each piece of map data included in the map database; and positioning the target image in the target positioning manner, to obtain a 6DOF of the target image. Therefore, when an image is positioned, an appropriate positioning solution may be selected from a plurality of positioning solutions based on different map quality corresponding to a location of the image. This achieves a positioning effect of higher precision and stability, implements an imperceptible upgrade and transition of map quality in terms of time and space, and improves user experience.

FIG. 9

## Description

This application claims priority to Chinese Patent Application No. 202111584656.9, filed with the China National Intellectual Property Administration on December 22, 2021 and entitled "FUSION POSITIONING METHOD BASED ON MULTI-TYPE MAP AND ELECTRONIC DEVICE", which is incorporated herein by reference in its entirety.

## TECHNICAL FIELD

This application relates to the field of terminal technologies, and in particular, to a fusion positioning method based on a multi-type map and an electronic device.

## BACKGROUND

The indoor and outdoor positioning technology is always a basic service in a terminal service. Accurate positioning can achieve excellent effects in fields such as map, navigation, and virtual-real combination.

A conventional positioning service is mainly based on a satellite signal, for example, a global positioning system (global positioning system, GPS)/BeiDou signal, and a communication base station/wireless fidelity (wireless fidelity, Wi-Fi)/Bluetooth signal. However, precision of a positioning result obtained by using these technical solutions is low. In addition, when being used, these technical solutions are easily affected by the environment, and in most cases, only specific location information can be provided, but posture information cannot be obtained. A posture sensor (for example, a gyroscope or a magnetometer) in a terminal device is usually inexpensive and has good performance. However, in an environment with magnetic field interference, an error of the posture sensor is usually large. For example, an error of the magnetometer usually exceeds 30 degrees. It can be learned that, in a current positioning solution, it is difficult to obtain 6 degree of freedom (6 degree of freedom, 6DOF) location and posture information corresponding to an image collected by the terminal. Therefore, how to obtain the 6DOF information corresponding to the image collected by the terminal is a technical problem that needs to be urgently resolved currently.

This application provides a fusion positioning method based on a multi-type map, a map upgrade/update method, an electronic device, a computer storage medium, and a computer program product, to accurately obtain 6DOF corresponding to an image collected by the electronic device.

According to a first aspect, this application provides a fusion positioning method based on a multi-type map. The method includes: obtaining a target image to be positioned; obtaining a target location at which the target image is photographed; determining, in a map database, target map quality of a map located at the target location, where the map in the map database includes a plurality of different types of map data, and each type of map data is corresponding to one basic positioning manner; determining a target positioning manner from a plurality of different preset positioning manners based on the target map quality, where the target positioning manner includes a basic positioning manner corresponding to each piece of map data included in the map database; positioning the target image in the target positioning manner, to obtain a 6 degree of freedom (6DOF) pose of the target image; and outputting the 6DOF of the target image. Therefore, when an image is positioned, a map that includes different types of map data is used, and an appropriate positioning solution may be selected from a plurality of positioning solutions based on different map quality corresponding to a location of the image. This achieves a positioning effect of higher precision and stability, implements an imperceptible upgrade and transition of map quality in terms of time and space, and improves user experience.

In a possible implementation, the map in the map database includes two different types of map data, where a positioning manner corresponding to one type of map data is a first basic positioning manner, and a positioning manner corresponding to the other type of map data is a second basic positioning manner; and the positioning the target image in the target positioning manner specifically includes: positioning the target image in the first basic positioning manner, to obtain a first 6DOF of the target image; extracting a 2D feature of the target image and a descriptor of the 2D feature in the second basic positioning manner; determining, based on the first 6DOF, the map data in the map database, and the 2D feature of the target image and the descriptor of the 2D feature, a 3D feature that is in the map database and that matches the 2D feature of the target image; determining the 6DOF of the target image based on the 2D feature of the target image, the 3D feature that matches the 2D feature of the target image, and historical image data, where the historical image data includes historical data of an image existing before the target image is obtained, and the historical data includes a 6DOF, a 2D feature, and a 3D feature of the image.

In a possible implementation, the map in the map database includes two different types of map data, a positioning manner corresponding to one type of map data is a first basic positioning manner, and a positioning manner corresponding to the other type of map data is a second basic positioning manner; and the positioning the target image in the target positioning manner specifically includes: positioning the target image in the first basic positioning manner, to obtain a first 6DOF of the target image; performing feature extraction on the target image in the second basic positioning manner, to obtain a global feature and a local feature that are of the target image; performing retrieval in the map data in the map database by using the global feature of the target image and the first 6DOF, to obtain an image similar to the target image; processing the local feature of the target image and the image similar to the target image, to obtain a quantity of interior points or a projection error between the target image and the image similar to the target image; and when a proportion of the quantity of interior points is greater than a preset proportion, or the projection error falls within a preset range, determining that the 6DOF of the target image is the first 6DOF.

In a possible implementation, the map in the map database includes two different types of map data, a positioning manner corresponding to one type of map data is a first basic positioning manner, and a positioning manner corresponding to the other type of map data is a second basic positioning manner; and the positioning the target image in the target positioning manner specifically includes: positioning the target image in the first basic positioning manner, to obtain a first 6DOF of the target image; rendering an image at a first 6DOF viewing angle by using model data in the map database, to obtain a first textureless image corresponding to the target image; processing the target image in a preset processing manner in the second basic positioning manner, to obtain a second textureless image corresponding to the target image, where the preset processing manner includes at least one of semantic segmentation, instance segmentation, and depth estimation; and when a target parameter between the first textureless image and the second textureless image falls within a preset range, determining that the 6DOF of the target image is the first 6DOF. For example, the target parameter may include a loss function (loss function) between the first textureless image and the second textureless image. The loss function may include one or more of a semantic intersection over union, an instance intersection over union, a contour line distance, a depth error, or the like.

In a possible implementation, the map in the map database includes two different types of map data, a positioning manner corresponding to one type of map data is a first basic positioning manner, and a positioning manner corresponding to the other type of map data is a second basic positioning manner; and the positioning the target image in the target positioning manner specifically includes: processing the target image in the first basic positioning manner, to obtain point cloud data of the target image; processing the target image in the second basic positioning manner, to obtain an image that is in the map database and that is most similar to the target image; determining data that is in the map database and that matches the point cloud data; and processing, by using a first algorithm, the image that is most similar to the target image and the data that matches the point cloud data, to obtain the 6DOF of the target image.

In a possible implementation, the map in the map database includes two different types of map data, a positioning manner corresponding to one type of map data is a first basic positioning manner, and a positioning manner corresponding to the other type of map data is a second basic positioning manner; and the positioning the target image in the target positioning manner specifically includes: positioning the target image in the first basic positioning manner to obtain the first 6DOF of the target image; processing the target image in the second basic positioning manner based on a location 3DOF and an orientation angle that are in the first 6DOF, to obtain an image that is in the map database and that is similar to the target image; and processing the image similar to the target image by using a first algorithm based on a posture 3DOF in the first 6DOF, to obtain the 6DOF of the target image.

In a possible implementation, the method further includes: determining that a quantity of images included in image data reaches a preset quantity; positioning each image in the image data to obtain pose information of at least a part of images in the image data; determining, from the map database, a correspondence between a 2D feature and a 3D feature that are of each image in the image data based on the pose information of the at least a part of images in the image data; performing, in the map database, matching on the at least a part of images based on the pose information of the at least a part of images in the image data, to obtain an image that has a co-view relationship with each of the at least a part of images; for an image whose pose information is not obtained in the image data, performing retrieval in the map database to obtain an image similar to the image whose pose information is not obtained, and performing 2D feature matching on the obtained image and the image whose pose information is not obtained, to obtain an image that has a co-view relationship with the image whose pose information is not obtained; for the image whose pose information is not obtained, obtaining, by using pose information of the image that has a co-view relationship with the image whose pose information is not obtained, the pose information of the image whose pose information is not obtained; and optimizing a pose and a 3D feature that are of an image whose pose information is obtained. In this way, when a quantity of obtained images reaches a preset quantity, the map may be updated/upgraded, so that with the collection of data and/or accumulation of crowdsourced data, map quality of each area on the map is gradually improved.

In a possible implementation, the method further includes: reading existing point cloud data in at least a part of areas on the map in the map database, using the point cloud data as a target point cloud, using a 3D feature corresponding to a constructed image in the image data as a source point cloud, and performing point cloud registration; and determining coordinates of a 3D feature corresponding to a remaining 2D feature in an image that has pose information and that is in the image data, and storing the image that has the pose information and that is in the image data, and a target parameter of the image that has the pose information into the map database, where the target parameter includes at least one of a global feature, pose information, a 2D feature, and a 3D feature.

According to a second aspect, this application provides a map upgrade/update method. The method further includes: determining that a quantity of images included in image data reaches a preset quantity; positioning each image in the image data to obtain pose information of at least a part of images in the image data; determining, from the map database, a correspondence between a 2D feature and a 3D feature that are of each image in the image data based on the pose information of the at least a part of images in the image data; performing, in the map database, matching on the at least a part of images based on the pose information of the at least a part of images in the image data, to obtain an image that has a co-view relationship with each of the at least a part of images; for an image whose pose information is not obtained in the image data, performing retrieval in the map database to obtain an image similar to the image whose pose information is not obtained, and performing 2D feature matching on the obtained image and the image whose pose information is not obtained, to obtain an image that has a co-view relationship with the image whose pose information is not obtained; for the image whose pose information is not obtained, obtaining, by using pose information of the image that has a co-view relationship with the image whose pose information is not obtained, the pose information of the image whose pose information is not obtained; and optimizing a pose and a 3D feature that are of an image whose pose information is obtained. In this way, when a quantity of obtained images reaches a preset quantity, the map may be updated/upgraded, so that with the collection of data and/or accumulation of crowdsourced data, map quality of each area on the map is gradually improved.

In a possible implementation, the method further includes: reading existing point cloud data in at least a part of areas on the map in the map database, using the point cloud data as a target point cloud, using a 3D feature corresponding to a constructed image in the image data as a source point cloud, and performing point cloud registration; and determining coordinates of a 3D feature corresponding to a remaining 2D feature in an image that has pose information and that is in the image data, and storing the image that has the pose information and that is in the image data, and a target parameter of the image that has the pose information into the map database, where the target parameter includes at least one of a global feature, pose information, a 2D feature, and a 3D feature.

According to a third aspect, this application provides an electronic device, including: at least one memory, configured to store a program; and at least one processor, configured to execute the program stored in the memory. When the program stored in the memory is executed, the processor is configured to perform the method according to the first aspect or the second aspect of the application.

According to a fourth aspect, this application provides a computer-readable storage medium. The computer-readable storage medium stores a computer program, and when the computer program runs on an electronic device, the electronic device is enabled to perform the method according to the first aspect or the second aspect of the application.

According to a fifth aspect, this application provides a computer program product. When the computer program product runs on an electronic device, the electronic device is enabled to perform the method according to the first aspect or the second aspect of the application.

It may be understood that, for beneficial effects of the third aspect to the sixth aspect, refer to related descriptions in the first aspect or the second aspect. Details are not described herein again.

**BRIEF DESCRIPTION OF DRAWINGS**

FIG. 1 is a diagram of a system framework of a visual positioning method according to an embodiment of this application;

FIG. 2 is a diagram of a map update and/or upgrade process according to an embodiment of this application;

FIG. 3 is a diagram of a process of a visual positioning method according to an embodiment of this application;

FIG. 4 is a diagram of a process of a visual positioning method according to an embodiment of this application;

FIG. 5 is a diagram of a process of a visual positioning method according to an embodiment of this application;

FIG. 6 is a diagram of a process of a visual positioning method according to an embodiment of this application;

FIG. 7 is a diagram of a process of a visual positioning method according to an embodiment of this application;

FIG. 8 is a diagram of a process of a visual positioning method according to an embodiment of this application; and

FIG. 9 is a schematic flowchart of a fusion positioning method based on a multi-type map according to an embodiment of this application.

**DESCRIPTION OF EMBODIMENTS**

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of embodiments of this application, unless otherwise specified, "a plurality of" means two or more. For example, a plurality of processing units are two or more processing units, and a plurality of elements are two or more elements.

In some embodiments, positioning may be performed by using a GPS/BeiDou satellite signal, a communication base station signal, or the like. This positioning method is based on signal strength of different satellites and base stations measured at a current location. When a quantity of satellites or base stations is greater than 4, positioning can be implemented. Currently, most map and navigation software are based on this method for positioning. The most widely used GPS positioning is used as an example. The principle of the GPS positioning is as follows: A device, for example, a mobile phone receives an electromagnetic wave signal transmitted by a satellite, and a current location of the device, for example, the mobile phone is calculated by using known locations of a plurality of satellites and signal propagation time. Because an electromagnetic wave signal transmitted by the satellite or the base station is interfered by an ionosphere, a distance calculated based on time is not a true distance. Therefore, signals from at least four satellites are required to obtain accurate location information. In addition, because positioning is performed by using the satellite or the base station, the fundamental principle is to calculate a propagation distance of an electromagnetic wave signal. In a city with high-rise buildings, the electromagnetic wave signal is easily interfered by a building surface. As a result, the calculated propagation distance is not the actual distance from the satellite. This severely affects positioning accuracy. In addition, a device posture cannot be determined by using only the positioning method.

In some embodiments, a 6DOF corresponding to an image collected by a terminal may be obtained in a visual positioning manner based on an offline panoramic map. For example, the 6DOF corresponding to the image collected by the terminal may be obtained in a global visual positioning system (global visual positioning system, GVPS) manner. For the GVPS, the GVPS first collects image information in an area by using a device, for example, a satellite, an aerial drone, or a ground collection vehicle, to construct a map database; then performs matching positioning in a specific range in the map database by combining a single image obtained by the terminal with information provided by a GPS, a sensor, and the like when the terminal collects the image; and finally obtains, by using a geometric relationship, accurate location information and posture angle information corresponding to the image, to implement a 6DOF positioning service.

For example, a panoramic photo may be collected based on specific density in a service area based on a panoramic map collected offline, and an extrinsic camera parameter of the panoramic photo, to be specific, an absolute location and a posture of a camera, is recorded (for ease of a subsequent process, the panoramic map may be divided into a plurality of pictures for storage, and the following panorama not only refers to a single panoramic photo, but also may refer to a group of a plurality of photos including 360-degree panoramic information, or even may refer to data including an abstract image feature). After a photo that includes rough location information (which is generally location information provided by a GPS) is taken, a panoramic map in a specific range is searched by using a global feature of the photo, to obtain a picture whose content is similar to that of the panoramic map. A relative pose change between the current photo and a photo in the database is obtained through extraction and matching of a local feature point, and then a precise pose of the current picture is obtained through calculation based on an absolute location and a posture that are corresponding to the photo stored in the database. In this way, a 6DOF of the photo can be obtained.

In the visual positioning manner based on the offline panoramic map, although a precise pose of the image obtained by the terminal can be obtained, the visual positioning manner has the following disadvantages: 1. Collection costs of a panoramic map are high: Because a stored picture needs to have a precise absolute pose, collection needs to be performed by professional personnel via a professional device. In addition, a collection procedure in a public area (for example, a square or a road) is complex. 2. A data amount is large and operation costs are high: When this solution is used, picture information or abstract feature point information in a picture needs to be stored. The data amount is large, and server running costs are high. 3. Matching based on a feature point is easily interfered by an environment change, for example, a seasonal change.

In some embodiments, the 6DOF corresponding to the image collected by the terminal may also be obtained in a level of detail model-based visual positioning (level of detail model-based visual positioning system, LoD-VPS) manner. For example, a city-level building model may be used, and a picture, a semantic map, or the like of a virtual viewing angle may be constructed in a manner, for example, through rendering, to implement accurate visual positioning and posture positioning, thereby implementing a 6DOF positioning service. This solution is mainly used to construct a city-level 3D model based on a satellite image and an aerial image. However, due to a high viewing angle and a low actual resolution of an image, a good texture (especially a side texture of a building) of the building or a road cannot be constructed. However, geometric precision of an overall three-dimensional model is high, and a monomer building can be distinguished and identified. Finally, in a building-based level of detail (level of detail, LoD) model, a semantic image, an instance image, and the like are rendered at a specific interval from a ground field of view, and are compared with a semantic image, an instance image, and the like extracted from an image shot by the terminal, to implement precise positioning.

In the level of detail model-based visual positioning manner, although a precise pose of the image obtained by the terminal can be obtained, due to a map precision of the visual positioning manner, positioning precision of the visual positioning manner based on the offline panoramic map cannot be achieved. In addition, the city model is limited by the satellite image and the aerial image, and is asymmetric with information about an image shot by a mobile phone. In some scenarios, this solution cannot implement positioning, for example, an indoor scenario, outdoor ceiling blocking, and severe tree blocking.

To improve accuracy of visual positioning, this application provides a visual positioning solution. The visual positioning solution fuses advantages of the visual positioning manner based on the offline panoramic map and the level of detail model-based level of detail model-based visual positioning manner, to implement a fusion positioning solution based on a multi-type map. This solution can adapt to a plurality of data types and pieces of data quality, and implement smooth spatial transition and smooth time transition in different data statuses.

The smooth spatial transition means that it is difficult to implement large-scale coverage of a city scenario by using the visual positioning manner based on the offline panoramic map, and an experience problem of a special area cannot be resolved by using the level of detail model-based visual positioning manner. Therefore, after a large area of a city is covered by using a LoD model (that is, when the level of detail model-based visual positioning manner is used), a small quantity of key areas and a special area are covered by using the offline panoramic map (that is, when the visual positioning manner based on the offline panoramic map is used). This solution is used to cover a boundary of the two coverage ranges, so as to implement smooth transition.

The smooth time transition refers to a boundary of a coverage area of the offline panoramic map (that is, when the visual positioning manner based on the offline panoramic map is used), or a coverage area constructed by using some low-precision and low-quality map data. This usually causes poor positioning experience. In this case, positioning experience may be gradually improved by using this solution based on a large amount of crowdsourced data or data recorded by collection personnel via a simple collection device. In a data accumulation process, for different data statuses, different positioning methods can be used in this solution to implement smooth transition of a positioning effect. The crowdsourced data may be understood as data of a large quantity of images provided by a user. For example, the image uploaded by the user via the terminal may be understood as the image provided by the user.

Data sources of this solution can be classified into two types and obtained in a plurality of manners.

(a) Level of detail model map data: The data can be obtained in a plurality of manners such as via a satellite, through aerial photography, and through ground collection. There are related mature technologies.
(b) Map data based on a 3D feature (for example, a 3D point feature or a 3D line feature) of an image: The data may be obtained in manners such as via a professional laser device, via a panoramic device, based on a street view image, and through rendering of a city model with texture, or may be constructed by using the crowdsourced data and the data collected via the simple collection device based on a level of detail model map.

This solution has the following advantages:

(a) A plurality of types of data sources are used as the map data to implement fast and low-cost coverage.
(b) Map quality and positioning experience are gradually improved by accumulating data.
(c) Good experience can be achieved in transition areas of different data types.

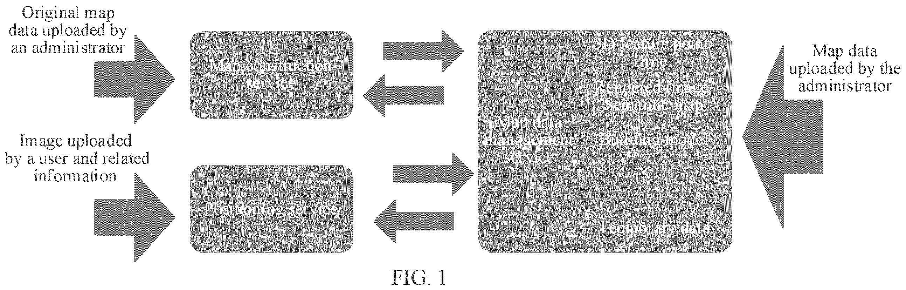

For example, FIG. 1 shows a system framework of a visual positioning method. As shown in FIG. 1, the system framework mainly includes a map construction service, a map data management service, and a positioning service.

The map construction service is mainly used to generate map data. A construction manner varies depending on input data. When a map is constructed, original map data uploaded by an administrator can be used, for example, original data such as a satellite image and a high-altitude aerial image, and data collected by a vehicle, a cart, and a backpack.

For example, the map data is mainly constructed in the following two manners. (a) The map data is obtained through rendering by using a constructed 3D model. In this solution, a city-level 3D model may be constructed by using the original data such as the satellite image and the high-altitude aerial image, and a model fine-grained level may be but is not limited to LoD2. Generally, due to an image resolution limitation, the model cannot carry texture information, or can carry only poor-quality texture information. However, the model has good geometric precision, so the model can be attached with semantics, instances, depth, and other information. In addition, to improve efficiency of single visual positioning, a virtual viewing angle of specific density may be selected on the ground. A semantic map, an instance map, and a depth map are obtained through rendering, and stored in a database. (b) Panoramic and laser devices are used to perform ground collection, and restore 3D element information through adjustment and other manners to obtain the map data. In this solution, panorama, laser, and GPS data can be collected via a vehicle, a cart, a backpack, and the like. Then, feature matching may be performed between images, or point cloud data may be fused with each other, to construct a 3D scenario. Then, coordinates of 3D data in actual space are obtained by combining a city control point. Finally, for a 2D feature (for example, a 2D feature point or a 2D feature line) in a panorama (or a panorama slice diagram), coordinates of a corresponding 3D feature (for example, a 3D feature point or a 3D feature line) in the constructed scenario are obtained, and the coordinates are stored in the database.

The map data management service comprehensively evaluates and manages the map data and records a map data status of each area, for example, the 3D feature, a rendered image/semantic map, and a building model. When a specific state is met (for example, map quality of an area meets a specific requirement), area data can be used to request the map construction service to construct and upgrade map data of the area. In addition, the administrator can directly upload a map constructed in various offline manners to a map database. Alternatively, other collected map data is uploaded to the map construction service, and after construction of a map is completed, the map is archived to the map database. For example, data of an image uploaded by a user via a terminal may be stored in the map data management service, for example, stored in the temporary data in the map database of the map data management service. When a data amount in the temporary data reaches a specific amount, the data may be used to upgrade and/or update the constructed map.

The positioning service is mainly oriented to the user. The positioning service may receive information, for example, the image uploaded by the user, a GPS, data (for example, pose information) detected by an inertia measurement unit (inertial measurement unit, IMU), and intrinsic and extrinsic parameters of a camera. In addition, the positioning service may also read the map data for positioning. After the positioning is completed, a 6DOF corresponding to the uploaded image is returned to the user, and information, for example, the image (or an abstract feature of the image) is stored in the temporary data in the map database of the map data management service.

ment service.

In the system framework shown in FIG. 1, the constructed map may be upgraded and/or updated based on an existing map construction solution by using crowdsourced data, to improve map precision. Therefore, a construction effect with high precision can be implemented based on existing map data in a low-cost collection manner.

In addition, in the system framework shown in FIG. 1, map quality of each area in the constructed map may also be evaluated in a multi-dimensional manner. For example, map data of an area is evaluated based on a plurality of indicators such as image quality, image collection density, 3D map element precision, and 3D element quantity. Then, different positioning policies can be automatically and specifically selected based on quantitative evaluation of different parameters to implement a best positioning effect for different map quality.

In addition, in the system framework shown in FIG. 1, when the image uploaded by the user is positioned, the image may be positioned in different positioning manners based on map quality of an area corresponding to the image uploaded by the user, so that different map levels are applicable, and better positioning experience and cheaper coverage are achieved. Based on this solution, more flexible deployment can be implemented. For example, overall coverage of a LoD-VPS positioning service is performed first, and then gradual upgrading and updating are performed, to resolve a positioning problem in a special scenario and build a high-precision 3D map.

Based on the content described above, the following separately describes map upgrade and/or update, map quality evaluation, and different positioning manners.

(1) Map upgrade and/or update

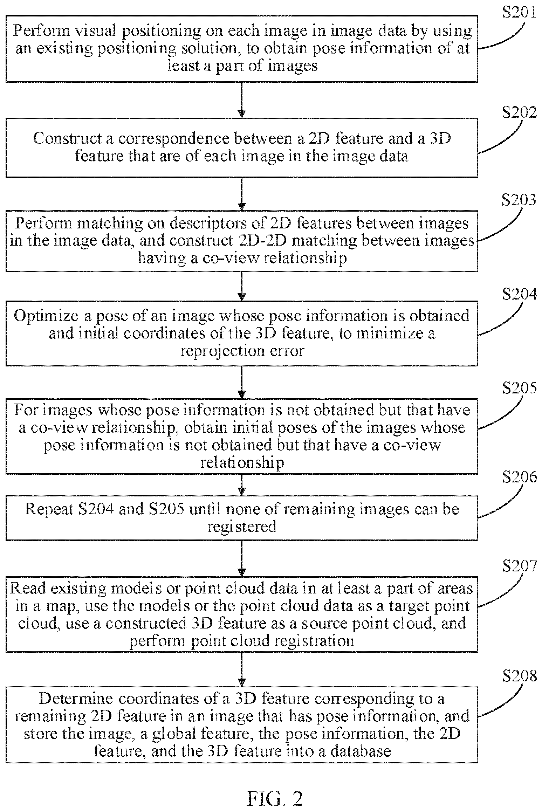

When a map is upgraded and/or updated, the map is mainly upgraded and/or updated based on crowdsourced data, in other words, the map data is upgraded and updated based on existing data in a low-cost collection manner. Specifically, as shown in FIG. 2, the map upgrade and/or update may include the following steps:

S201. Perform visual positioning on each image in image data by using an existing positioning solution, to obtain pose information of at least a part of images.

Specifically, visual positioning may be performed on each image in the image data by using, but not limited to, the existing positioning solution, to obtain the pose information of the at least a part of images. For example, the pose information of the image may include a 6DOF of the image. In an example, in this phase, because map data quality is low, or there is only textureless model data, positioning results can be obtained only for a part of images in the image data, and positioning fails for other images.

In a possible implementation, the pose information may also be obtained by using data obtained when the image uploaded by the user is positioned.

In some embodiments, S201 may be performed each time, or may be selectively performed based on an actual situation. This is not limited herein. When pose information of each image is obtained in advance, the pose information of each image may be directly read.

S202. Construct a correspondence between a 2D feature and a 3D feature that are of each image in the image data.

Specifically, for images that are successfully positioned in S201, 3D features corresponding to 2D features of these images may be directly read from the database, to obtain initial coordinates of the 3D features corresponding to the 2D features of the images. The database may store an image, a global feature, pose information, a 2D feature, a 3D feature, map-related data (for example, coordinate information of different locations), and the like.

For images that fail to be positioned in S201, coordinates of 3D features corresponding to 2D features of these images on the model may be solved in a manner of ray intersection.

Therefore, the correspondence between the 2D feature and the 3D feature of each image in the image data is constructed. For example, the 2D feature may include a 2D feature point, a 2D feature line, and the like, and the 3D feature may include a 3D feature point, a 3D feature line, and the like.

S203. Perform matching on descriptors of 2D features between images in the image data, and construct 2D-2D matching between images having a co-view relationship.

Specifically, for the images that are successfully positioned in S201, an image pair that has a co-view relationship may be filtered out by using pose results. For example, when the pose results are used for filtering, two images having an overlapping area may be used as an image pair.

For the images that fail to be positioned in S201, the image pair may be obtained in an image retrieval manner, and then verified in a 2D-2D matching manner. In an example, for an image that fail to be positioned, because a 6DOF of the image cannot be determined, an image pair may be obtained in the image retrieval manner. For example, for any image that fails to be positioned, a similarity between the image and each image that is successfully positioned may be separately obtained, and then the image and an image that is successfully positioned and that has a highest similarity are used as the image pair. Finally, after the image pair is determined, verification may be performed by using descriptors of 2D features of the two images in the image pair, to ensure that the two images may have a co-view relationship. For example, verification may be performed by using a similarity between descriptors of 2D features of two images, for example, verification is performed by using a cosine similarity between descriptors of two 2D features. When the similarity is greater than a specific value, it may be determined that the verification succeeds.

S204. Optimize a pose of the image whose pose information is obtained and the initial coordinates of the 3D feature, to minimize a reprojection error.

Specifically, the coordinates of the 3D feature, of the image whose pose information is obtained (namely, the image that is successfully positioned), projected to an image may be calculated by using an existing camera model and a camera intrinsic parameter, a projection error is calculated as a loss of an optimization problem, and the pose of the image whose pose information is obtained and the initial coordinates of the 3D feature are optimized. For example, the pose of the image whose pose information is obtained and the initial coordinates of the 3D feature may be processed by using, but not limited to a bundle adjustment (bundle adjustment, BA) method, to perform optimization.

S205. For images whose pose information is not obtained but that have a co-view relationship, obtain, through 2D-3D matching, initial poses of the images whose pose information is not obtained but that have a co-view relationship.

Specifically, for the images whose pose information is not obtained but that have a co-view relationship, the initial poses of the images whose pose information is not obtained but that have a co-view relationship may be obtained through the 2D-3D matching. For example, for the images whose pose information is not obtained but that have a co-view relationship, an image whose pose information is obtained and that has a co-view relationship with the images whose pose information is not obtained may be used, to obtain, by using a PnP (perspective-n-point) algorithm, the initial poses the image whose pose information is not obtained but has a co-view relationship.

In some embodiments, when a quantity of registered images reaches a specific value, or none of the remaining images can be registered, the process stops. Image registration may be understood as obtaining an initial pose of an image. That an image cannot be registered may be understood as that an initial pose of the image cannot be obtained. For example, when an image does not have a co-view relationship with other images, it may be determined that the image cannot be registered.

S206. Repeat S204 and S205 until none of the remaining images can be registered. In this case, 3D information of the scenario is constructed by using the image. For example, the 3D information may include coordinates corresponding to a 2D feature, coordinates corresponding to a 3D feature, and the like of the image.

S207. Read existing models or point cloud data in at least a part of areas in the map, use the models or the point cloud data as a target point cloud, use a constructed 3D feature as a source point cloud, and perform point cloud registration.

Specifically, a location of an area to which each image belongs may be indexed from the database by using a location of each image in the image data, to determine, from the database, a model or point cloud data corresponding to the area to which each image belongs, to obtain the target point cloud. In addition, a 3D feature that has been constructed in the area to which each image belongs may also be determined in the database, and the 3D feature is used as the source point cloud. After the target point cloud and the source point cloud are obtained, the target point cloud and the source point cloud may be processed by using a point cloud registration algorithm, to perform point cloud registration. In this way, small errors of a pose and a 3D feature of each image in the image data are corrected, and alignment precision between a constructed map and a real-world map is further improved.

S208. Determine coordinates of a 3D feature corresponding to a remaining 2D feature in an image that has pose information, and store the image, a global feature, the pose information, the 2D feature, and the 3D feature into the database.

Specifically, for any image that has pose information, coordinates of a 3D feature corresponding to each 2D feature in the image may be determined by performing triangulation or ray intersection on the pose (that is, the pose obtained through correction in S207) of the image. Then, the image, the global feature, the pose information, the 2D feature, and the 3D feature may be stored in the database.

It may be understood that the coordinates of the 3D feature corresponding to the 2D feature in the image determined in the step before S208 may be only coordinates of a 3D feature corresponding to a part of 2D features in the image, in other words, the other 2D features in the image have no coordinate of the corresponding 3D feature. Therefore, the coordinates of the 3D feature corresponding to the other 2D features in the image may be determined in S208. In this way, coordinates of 3D features corresponding to all 2D features in the image are obtained.

Therefore, a high-definition map is constructed. With the accumulation of collected data and/or crowdsourced data, map quality of each area in the map will gradually improve.

(2) Map quality evaluation

A success rate and precision of visual positioning are closely related to map quality. Map data collected by a high-precision device can ensure positioning. However, collection quality and map precision cannot be ensured through rendering, a street view, or an image collected by a handheld device. Therefore, map quality of an area may be described from a plurality of perspectives, to implement proper use of different positioning policies. Because quality of a LoDx model (LoDx Model) has a related standard and definition, the map quality described in this solution may be map data quality of a map having a 3D feature.

In this solution, map quality of an area may be described by using the following dimensions (posture precision, 3D feature precision, and 3D feature density and distribution):

(a) Posture precision

The pose precision is a precision degree of 6dof data corresponding to an image. Because there is no pose truth value, an evaluation of this indicator is implemented in the following two aspects. First, a high-precision device is used in an early stage to collect data with a true value, and pose precision levels of different data are determined by evaluating poses of different map data. Second, in a map creation process, a quantity of co-view relationships, a quantity of matching interior points, an average reprojection error, and a feature depth that are of an image may indirectly reflect stability and precision of a pose.

The pose precision of the map data may be classified into five levels in the foregoing two manners. Professional laser equipment collects data, and the processing precision is the highest, which is level 1. An image with only an initial pose has lowest pose precision, which is level 5. After a beam adjustment method is applied to a local part, the pose precision is improved to level 4. After global alignment, the pose precision is improved to level 3.

(b) 3D feature precision

The 3D feature precision is similar to the pose precision, and may also be graded in the foregoing two manners. For details, refer to the foregoing descriptions. Details are not described herein again.

(c) 3D feature density and distribution

The 3D feature density and distribution are mainly related to a feature matching quantity and/or calculated pose precision during positioning. In scenarios with rich 3D features, more information is available for positioning, and the positioning is more robust. The 3D feature distribution is also important. The more uniform the distribution is, the stronger a binding force on a pose is, and the more accurate and robust a result of a pose solution is.

The 3D feature density and distribution may be defined and calculated by using the following formulas. Specifically, city three-dimensional space may be divided based on a somatic model, and somatic elements on which a city surface is located are marked as interest somatic elements based on a city model. These interest somatic elements may form a set I. Then, a quantity $F_i$ of different types of features in each interest somatic element is counted, where $i$ = 1, 2, 3, ..., $s$. $s$ may be the quantity of feature types. Then, the 3D feature density and distribution may be obtained by using the following formulas. The formula is:

$$\varepsilon = ave\big(P(z)\big)$$

$$\theta = std\big(P(z)\big)$$

$\varepsilon$ is the 3D feature density, $\theta$ is the 3D feature distribution, $z \in I$, $P(z) = \sum_{i=1}^{s} \lambda_i F_i$ (z), $\lambda$ is a weight of a quantity of features corresponding to a single interest somatic element, and s is the quantity of feature types.

After the 3D feature density and distribution in a map are obtained, a map quality level corresponding to each area may be divided based on the 3D feature density and distribution in each area.

(d) Quantity of images

The quantity of images is a quantity of images per unit area within a road network range (that is, a range that a user can reach). After the quantity of images is obtained, a level of an area may be set based on the quantity of images in the area.

(e) Image coverage rate

The image coverage rate may be defined in the following manner.

A road network area in a specific range may be first divided into N non-overlapping planar areas, and each small area is further divided into M non-overlapping orientation areas based on an orientation, and there are a total of N*M small areas. Then, an image is marked in a corresponding small based on a pose corresponding to the image, and a quantity of images in each small area is recorded, to obtain mapping, which is P, between the area and the quantity of images in the area. Finally, the image coverage rate may be obtained by using the following formula. The formula is:

$$\gamma = \frac{\|\{Z|P(Z) > 0\}\|}{N \cdot M}$$

$$\rho = max(n) \quad s.t. \frac{\|\{Z|P(Z) \geq n\}\|}{N \cdot M} > \gamma_s$$

$\gamma$ is the image coverage rate, $\rho$ is image coverage density, and $\gamma_s$ is a calibrated parameter, for example, $\gamma_s$ may be set to 65.26%.

After an image coverage rate and/or image coverage density in a map are/is obtained, a map quality level corresponding to each area may be divided based on an image coverage rate and/or image coverage density in each area.

(f) Image quality

The image quality may be image resolution, clarity, and the like, and may be set based on a photographing device.

After image quality in a map is obtained, a map quality level corresponding to each area may be divided based on image quality of an image in each area. In some embodiments, when the map quality level is determined by using an image resolution, the level may be determined by using an average angular resolution of the image. For example, for a high-definition (1440*1080) image shot by a common mobile phone, an angular resolution is approximately 0.05°/pix, and may be defined as level 3, an angular resolution of a consumer-level panoramic camera is approximately 0.07°/pix, and may be defined as level 4, and an angular resolution of a professional panoramic capture camera may reach 0.03°/pix, and may be defined as level 1.

After the map quality data is obtained in one or more of the foregoing manners, the map quality data may be stored in the following manners. First, a geographical area is divided into blocks according to a specific size, for example, 50 m. Then, an identifier of map data included in each block indicates whether the area has map data. For a range that is not in a service area, the identifier is no. Then, map data in the service area has the foregoing indicators, and specific values of the indicators are for reference only and are not limited. For different floors that may exist in the area, a plurality of groups of data need to be used for storage. Finally, overall data can be stored in a two-dimensional table. Considering continuity of geographical features, a quadtree storage manner can be used to reduce space occupied by the data.

(3) Positioning manner

In this solution, different positioning manners may be designed for different map quality, to implement visual positioning in all scenarios. In addition, feature information (for example, a 2D feature or a 3D feature) included in a map database in this solution can also be used to improve a positioning effect to some extent. The following describes several positioning manners.

(a) Textureless model (that is, a level of detail model)-based visual positioning (LoD-VPS)

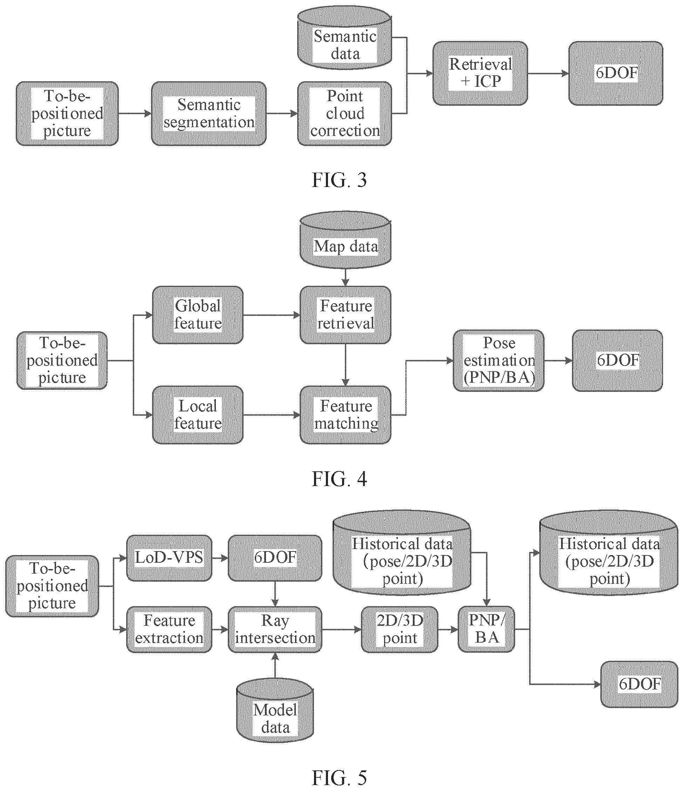

Based on the textureless model, semantic information is mainly used for positioning. Specifically, as shown in FIG. 3, in a positioning procedure, after an image (that is, a to-be-positioned picture shown in the figure) that needs to be positioned and that is uploaded by a user is obtained, semantic segmentation may be performed on the image by using a pre-trained neural network model, to obtain point cloud data of the image, and the point cloud data is corrected based on a preset algorithm. Then, the point cloud data obtained through correction may be registered by using a point cloud precise registration (iterative closest point, ICP) algorithm, and semantic data stored in the database is retrieved by using registered point cloud data, to obtain data that matches the point cloud data, and posture information corresponding to the data is used as a 6DOF of an image corresponding to the point cloud data.

In some embodiments, the semantic segmentation may be extended to instance segmentation and depth estimation, and loss corresponding to an instance and a depth feature is fused in a retrieval and icp process, to further improve applicability and precision of a positioning algorithm.

(b) Image feature-based visual positioning (global visual positioning system, GVPS)

The image feature-based visual positioning is mainly performed by using a 3D feature. Specifically, as shown in FIG. 4, in the positioning procedure, after an image (that is, a to-be-positioned picture shown in the figure) that needs to be positioned and that is uploaded by a user is obtained, a global feature and a local feature of the image may be extracted by using, but not limited to, a pre-trained neural network model. Then, feature retrieval is performed in map data in the database by using a global feature, to retrieve images similar to the image. Then, feature matching is performed on the retrieved images by using the local feature, to obtain one or more images that are most similar to the image. Finally, the image and an image that is most similar to the image are processed by using a PNP/BA algorithm to obtain a 6DOF of the image.

In some embodiments, a linear feature of the image may be added during feature matching, to improve positioning precision and a success rate in an indoor weak texture scenario.

(c) Local adjustment optimization location

In the local adjustment optimization positioning manner, as shown in FIG. 5, after an image (that is, a to-be-positioned picture shown in the figure) that needs to be positioned and that is uploaded by a user is obtained, a 6DOF of the image, namely, pose data, may be first obtained in "a LoD-VPS-based manner mentioned in the foregoing solution (a)"; and a 2D feature of the image and a descriptor thereof are extracted by using a pre-trained neural network model. Then, the 2D feature of the image, the determined 6DOF, and data of a map model in the database are processed in a ray intersection manner, to obtain coordinates of a rough 3D feature corresponding to the 2D feature of the image. After the 2D feature of the image and the coordinates of the rough 3D feature corresponding to the 2D feature of the image are obtained, the 2D feature of the image and the coordinates of the rough 3D feature corresponding to the 2D feature of the image may be processed by using a PNP/BA algorithm based on data of an area in which the image is located in the database, to obtain an optimized 6DOF, an optimized 2D feature, and an optimized 3D feature. An optimized pose may be used as an output result, and the 2D and 3D features continue to be stored in the database for subsequent positioning.

In some embodiments, this solution may be applicable to an area with low image density, low pose precision, and low 3D point precision in the database. A positioning effect of this positioning manner is not worse than that of "the LoD-VPS-based manner mentioned in the foregoing solution (a)". In addition, as a quantity of images in the area gradually increases, a positioning effect is gradually improved.

(d) Cross-verification positioning

When the cross-verification positioning manner is used, after an image (that is, a to-be-positioned picture shown in the figure) that needs to be positioned and that is uploaded by a user is obtained, a solution may be first selected as a main positioning solution based on map quality of an area corresponding to the image from "the LoD-VPS-based manner mentioned in the foregoing solution (a)" and "a GVPS-based manner mentioned in the foregoing solution (b)". Then, a positioning result obtained in the main solution is verified in another positioning manner. When the verification succeeds, the positioning result is output. Otherwise, a positioning failure result is output. In this way, robustness of the algorithm is greatly improved in this cross-verification manner.

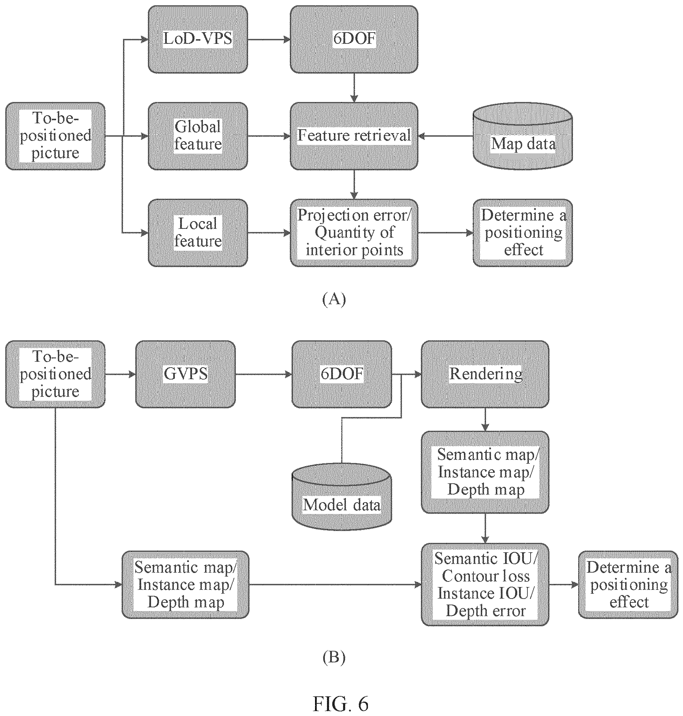

When "the LoD-VPS-based manner mentioned in solution (a)" is used as the main solution, as shown in (A) in FIG. 6, a 6DOF of the image may be obtained by using the foregoing "solution (a)", and a global feature and a local feature of the image may be extracted in the manner described in the foregoing "solution (b)". Then, feature retrieval and matching are performed in map data in the database by using the obtained global feature and based on the obtained 6DOF, to obtain an image similar to the image. Then, the local feature of the image and the obtained image similar to the image may be processed by using a preset algorithm, to obtain a quantity of interior points and/or a projection error between the image and the obtained image similar to the image. Finally, the obtained 6DOF of the image may be verified by using the obtained quantity of interior points and/or the projection error. When the projection error falls within a preset range and/or a proportion of the quantity of interior points falls within the preset range is greater than a preset proportion, it may be determined that the obtained 6DOF is accurate, and the 6DOF may be output; otherwise, it is determined that the obtained 6DOF is inaccurate, and positioning failure information may be output.

When "the GVPS-based manner mentioned in solution (b)" is used as the main solution, as shown in (B) in FIG. 6, the 6DOF of the image may be obtained by using the foregoing "solution (a)". Then, a semantic map, an instance map, and a depth map (which are collectively referred to as a textureless feature map below) in a 6DOF viewing angle may be rendered based on a camera parameter corresponding to the image by using model data in the database, to obtain the textureless feature map in the 6DOF viewing angle. In addition, the textureless feature map corresponding to the obtained image may also be obtained in a manner, for example, semantic segmentation, instance segmentation, and/or depth estimation. Finally, by comparing the two groups of textureless feature maps, it is determined whether the obtained 6DOF of the image is accurate.

In a possible implementation, whether the obtained 6DOF of the image is accurate may be determined by using a loss function (loss function) between the two groups of textureless feature maps. For example, the loss function of the two groups of textureless feature maps may include one or more of a semantic intersection over union, an instance intersection over union, a contour line distance, a depth error, and the like. In an example, when the semantic intersection over union and/or the instance intersection over union of the two are/is greater than a preset value, it may be determined that the obtained 6DOF is accurate, and in this case, the 6DOF may be output; otherwise, it is determined that the obtained 6DOF is inaccurate, and in this case, the positioning failure information may be output. In an example, when the contour line distance and/or the depth error of the two are/is less than the preset value, it may be determined that the obtained 6DOF is accurate, and in this case, the 6DOF may be output; otherwise, it is determined that the obtained 6DOF is inaccurate, and in this case, the positioning failure information may be output.

(e) Multi-type loss fusion positioning

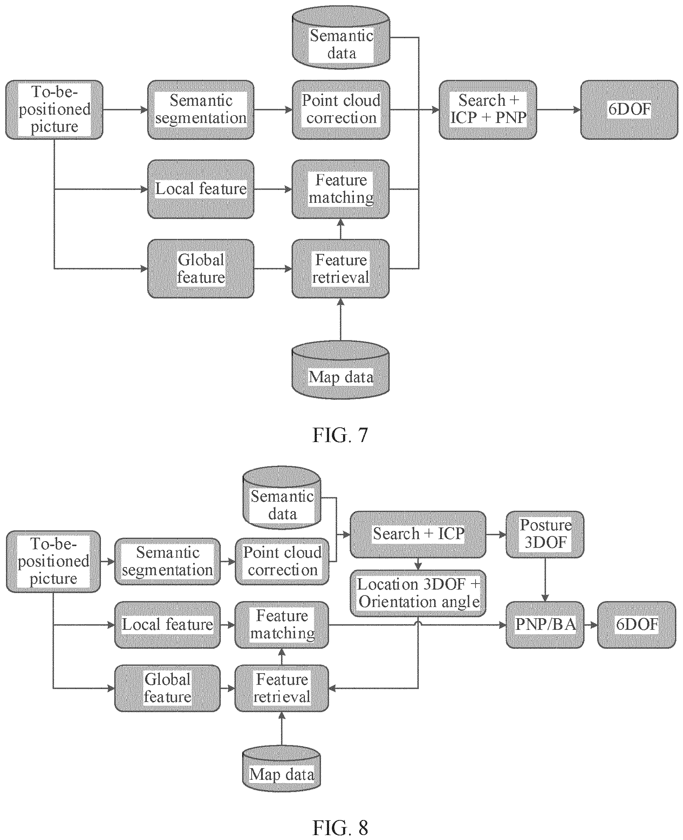

The multi-type loss fusion positioning is mainly performed by combining the " LoD-VPS-based manner mentioned in the foregoing solution (a)" and "the GVPS-based manner mentioned in the foregoing solution (b)" for positioning. Specifically, as shown in FIG. 7, after an image (that is, a to-be-positioned picture shown in the figure) that needs to be positioned and that is uploaded by a user is obtained, point cloud data corresponding to the image may be obtained in "the LoD-VPS-based manner mentioned in the foregoing solution (a)". In addition, an image similar to the image and an image that is most similar to the image are obtained in "the GVPS-based manner mentioned in the foregoing "solution (b)". In addition, a matching correspondence between a feature of the image and a feature of the similar image may also be obtained. Finally, obtained point cloud data is registered by using an ICP algorithm, and semantic data stored in the database is retrieved by using the registered point cloud data, to obtain data that matches the point cloud data; and the obtained data and an obtained image that is most similar to the image are processed by using a beam adjustment algorithm, to obtain a 6DOF corresponding to the image. In an example, an initial alignment pose between the image and the point cloud data may be obtained through search and the ICP algorithm. Because the point cloud data has semantic, instance, and depth information, the point cloud data can provide a semantic loss, an instance loss, and a depth loss that are in the image. A feature point correspondence is obtained through feature matching, so that a reprojection error loss of a 3D feature (for example, a 3D point feature or a 3D line feature) on the image may be calculated. Finally, losses are overlaid and fused by using configurable weights, and an optimization solver can be used for joint optimization to obtain the 6DOF corresponding to the image.

A front end of the algorithm may perform the following operations in parallel. 1. Extract a textureless feature map, for example, a semantic map, an instance map, and a depth map of the image. 2. Extract a global feature vector of the image and complete database feature retrieval. 3. Extracts a local feature point/line of the image and completes matching.

A back end of the algorithm may fuse losses of the LoD-VPS solution and the GVPS solution, including a semantic IOU, a contour loss, a reprojection error of a feature point line, and the like, to adjust a beam.

In some embodiments, this solution may be applicable to a scenario in which map quality is high, and different fusion loss weights may be set based on the map quality, to improve positioning precision and stability of the algorithm.

(f) Rotation-translation separation estimation positioning

The rotation-translation separation estimation positioning is mainly performed by combining "the LoD-VPS-based manner mentioned in the foregoing solution (a)" and "the GVPS-based manner mentioned in the foregoing solution (b)" for positioning. Specifically, as shown in FIG. 8, after an image (that is, a to-be-positioned picture shown in the figure) that needs to be positioned and that is uploaded by a user is obtained, a 6DOF corresponding to the image may be obtained in "the LoD-VPS-based manner mentioned in the foregoing solution (a)". Then, feature retrieval may be performed in the database by using a global feature obtained in "the GVPS-based manner mentioned in the foregoing solution (b)", to retrieve an image similar to the image. During retrieval, retrieval may be performed based on a location 3DOF and an orientation angle in a 6DOF of the obtained image, to reduce a retrieval range and improve retrieval efficiency. In addition, retrieval results are filtered, and retrieval accuracy is improved. Finally, an image that is most similar to the image and that is obtained through local feature matching in "the GVPS-based manner mentioned in the foregoing solution (b)" is processed by using a PNP/BA algorithm, to obtain the 6DOF of the image. In a processing process, a posture 3DOF (to be specific, a pitch (pitch), a yaw (yaw) angle, and a roll (roll) angle) in the 6DOF corresponding to the first obtained image may be processed. In other words, initial posture information is fused to decouple translation and rotation estimation, and a posture constraint is realized by using a strong constraint of a model contour on an angle. For example, in a fusion process, the angle may be first calculated based on a feature point, and then the translation is calculated at a fixed angle.

In some embodiments, a process of the rotation-translation separation estimation manner may be: first performing feature extraction, for example, extracting a textureless feature map, a global feature, and a local feature. Then, an initial pose is obtained based on the LoD-VPS solution, and the pose is decomposed into a 3-axis location and three angles: roll, pitch, and heading. Then, the map data in the database is retrieved by using the global feature and fusing location and orientation information in the initial pose. Then, feature matching is performed on retrieved data by using the local feature. Finally, a result obtained by performing the feature matching is used, initial posture information (that is, the posture 3DOF) is fused, translation and rotation estimation are decoupled, and a strong constraint on an angle is imposed by using a model contour. The angle may be first calculated based on a feature point, and then translation is calculated at a fixed angle. Finally, the calculated angle and translation information are combined into 6DOF information for output. It may be understood that, during feature retrieval, filtering of an initial location (xyz) and an orientation angle is added (for example, filtering is performed by using a distance or an angle difference between a pose corresponding to an image that has been marked in the database and a current initial result), so that some incorrect retrieval results can be effectively filtered out. In addition, model map data provides a strong angle constraint on a positioning result. Therefore, in a final positioning process, in comparison with a conventional solution in which rotation and translation are estimated at the same time, a rotation component may be preferentially estimated, and a strong constraint of existing information is fully used, to improve an angle positioning effect. After angle calculation is completed, a translation component is calculated by using 2D-3D feature matching information. With the known constraint, only the translation component is optimized, and more accurate and robust location results can be obtained.

In some embodiments, this solution may be applied to a scenario in which the map quality is high. By fusing a point-line feature and a model structure feature, positioning stability and precision can be improved to some extent, and positioning problems in an indoor repeated texture scenario, a weak texture scenario, and an outdoor ultra-distant scene scenario can be resolved.

In some embodiments, all the foregoing described calculation manners may be implemented by using, but not limited to, a pre-trained neural network model.

The following describes, based on the content described above, a fusion positioning method based on a multi-type map provided in an embodiment of this application. It may be understood that the method is proposed based on the content described above. For some or all of the method, refer to the foregoing related descriptions.

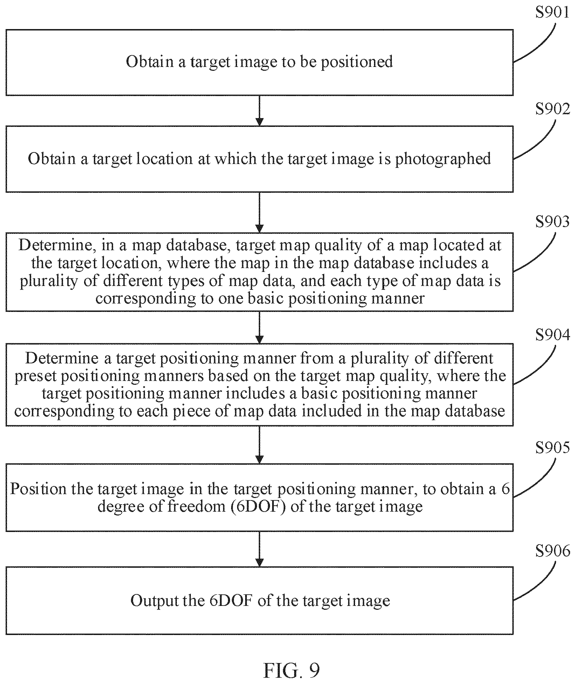

FIG. 9 is a schematic flowchart of a fusion positioning method based on a multi-type map according to an embodiment of this application. It may be understood that the method may be performed by any apparatus, device, platform, or device cluster that has computing and processing capabilities. For ease of description, the following uses execution of a server as an example for description. It may be understood that the server may be replaced with another device, and a replacement solution still falls within the protection scope of this application. As shown in FIG. 9, the fusion positioning method based on a multi-type map may include the following steps.

S901. Obtain a target image to be positioned.

Specifically, when an electronic device photographs a target image, the electronic device may upload the target image to a server. In this way, the server obtains the target image to be positioned.

S902. Obtain a target location at which the target image is photographed.

Specifically, data that may be uploaded by the electronic device to the server may further include the target location at which the target image is currently photographed. In this way, the server can obtain the target location at which the target image is photographed.

S903. Determine, in a map database, target map quality of a map located at the target location, where the map in the map database includes a plurality of different types of map data, and each type of the map data is corresponding to one basic positioning manner.

Specifically, after the server obtains the target location, the server may determine, in the map database, the target map quality of the map at the target location. The map quality in the map database may be determined in advance, for example, determined in the foregoing "map quality evaluation" manner. For example, the map in the map database may include the plurality of different types of map data, and each type of map data is corresponding to one basic positioning manner. For example, the map in the map database may include level of detail model map data and image-based 3D feature (for example a 3D point feature or a 3D line feature) map data of an image. A positioning orientation corresponding to the level of block model map data may be the "image feature-based global visual positioning system (global visual positioning system, GVPS)" manner described above, and a positioning manner of the map data based on the 3D feature of the image may be the "none-texture model-based visual positioning (LoD-VPS)" manner described above.

S904. Determine a target positioning manner from a plurality of different preset positioning manners based on the target map quality, where the target positioning manner includes a basic positioning manner corresponding to each piece of map data included in the map database.

Specifically, after the target map quality is obtained, the target positioning manner may be determined from the plurality of different preset positioning manners based on the target map quality, where the target positioning manner includes the basic positioning manner corresponding to each piece of map data included in the map database. It may be understood that each of the plurality of different preset positioning manners includes the basic positioning manner corresponding to each piece of map data included in the map database. That the basic positioning manner corresponding to each piece of map data included in the map database is included may be understood as that all or a part of steps in each of the plurality of basic positioning manners are included.

In some embodiments, map quality evaluation may be classified into six dimensions: pose precision, 3D feature precision, 3D feature density and distribution, a quantity of images, image coverage, and image quality. Each dimension may be classified into five levels. Level 1 to level 5 respectively represent high, relatively high, medium, relatively low, and low (which represents relative indicators and is used only for example).

In ideal cases, a professional device is used to collect data, and map quality of each dimension is the highest level 1. In this case, the GVPS positioning solution can be used. If only model data is available, the LoD-VPS positioning solution can be used.

When a LoD-VPS service covers an area and user crowdsourced data is available, all indicators in the map data are of level 5. In this case, the "local adjustment optimization positioning" described above can be used to perform joint positioning. In addition, existing map data (a pose and a 3D point) can be optimized, to improve the positioning precision.

When user data gradually increases, and the quantity of images and the pose precision reach level 4, a positioning solution in which a LoD-VPS is used as a main solution in the foregoing "cross-validation positioning" may be used, and an existing image is used to verify a result.

When the quantity of images and the coverage rate gradually increase to level 3, a map can be constructed. After the map is constructed, the map pose precision and the 3D feature precision can be improved to level 3. In this case, the positioning solution in which the GVPS solution is used as a main solution in the "cross-validation positioning" described above may be used. In this map quality condition, a result precision of the GVPS is higher than that of the LoD-VPS.

When the map is more complete, the coverage rate reaches level 2, the 3D feature density and distribution reach level 3, and precision of a pose and a 3D point reaches level 3, the positioning solution in the "multi-type loss fusion positioning" described above can be used for positioning. In this case, the map density is high, and the precision also reaches a specific standard. After the 3D feature obtained through retrieval is fused into a target function of positioning optimization, a good constraint may be imposed, and positioning precision and stability may be improved.

When the 3d feature distribution is improved to level 2, or when precision of data obtained in some other manners is high but there is a defect in coverage density or image quality, for example, a collected street view, the coverage density of such type of data is only level 3, or the quality of an image rendered by using a texture model constructed by using an aerial image is low and can reach only level 4 to level 5, the positioning solution in the foregoing "rotation-translation separation estimation positioning" may be used for positioning. Based on the GVPS solution, this solution adds a constraint on a posture of the model map data to improve positioning angle precision, adds a priori of the model data to image retrieval, and improves weak texture and repeated texture problems.

S905. Position the target image in the target positioning manner, to obtain a 6 degree of freedom (6DOF) of the target image.

Specifically, after the target positioning manner is determined, the target image may be positioned in the target positioning manner, to obtain the 6 degree of freedom (6DOF) of the target image.

S906. Output the 6DOF of the target image.

Specifically, after obtaining the 6 DOF of the target image, the server may output the 6DOF of the target image, for example, send the 6DOF of the target image to the electronic device, to display the 6DOF on the electronic device.

Therefore, when an image is positioned, a map that includes different types of map data is used, and an appropriate positioning solution may be selected from a plurality of positioning solutions based on different map quality corresponding to a location of the image. This achieves a positioning effect of higher precision and stability, implements an imperceptible upgrade and transition of map quality in terms of time and space, and improves user experience.

In some embodiments, the map in the map database includes two different types of map data, a positioning manner corresponding to one type of map data is a first basic positioning manner, and a positioning manner corresponding to the other type of map data is a second basic positioning manner. For example, the first basic positioning manner may be the "LoD-VPS" solution described above, and the second basic positioning manner may be the "GVPS" solution described above.

The positioning the target image in the target positioning manner may be: first, positioning the target image in the first basic positioning manner, to obtain a first 6DOF of the target image. Then, a 2D feature of the target image and a descriptor of the 2D feature are extracted in the second basic positioning manner. Then, a 3D feature that is in the map database and that matches the 2D feature of the target image is determined based on the first 6DOF, the map data in the map database, and the 2D feature of the target image and the descriptor of the 2D feature. Finally, the 6DOF of the target image is determined based on the 2D feature of the target image, the 3D feature that matches the 2D feature of the target image, and historical image data. The historical image data includes historical data of an image existing before the target image is obtained, and the historical data includes the 6DOF, the 2D feature, and the 3D feature of the image. This positioning manner may be understood as the "local adjustment optimization positioning" solution described above, that is, the solution shown in FIG. 5. For details, refer to the foregoing descriptions. Details are not described herein again.

In some embodiments, the map in the map database includes two different types of map data, a positioning manner corresponding to one type of map data is a first basic positioning manner, and a positioning manner corresponding to the other type of map data is a second basic positioning manner. For example, the first basic positioning manner may be the "LoD-VPS" solution described above, and the second basic positioning manner may be the "GVPS" solution described above.

The positioning the target image in the target positioning manner may be: first, positioning the target image in the first basic positioning manner, to obtain a first 6DOF of the target image. Then, feature extraction is performed on the target image in the second basic positioning manner, to obtain a global feature and a local feature that are of the target image. Then, retrieval is performed in the map data in the map database by using the global feature of the target image and the first 6DOF, to obtain an image similar to the target image. Then, the local feature of the target image and the image similar to the target image are processed, to obtain a quantity of interior points or a projection error between the target image and the image similar to the target image. Finally, when a proportion of the quantity of interior points is greater than a preset proportion, or the projection error falls within a preset range, it is determined that the 6DOF of the target image is the first 6DOF. This positioning manner may be understood as a positioning manner in which the "LoD-VPS" is used as a main solution in the "cross-validation positioning" described above, that is, the solution shown in (A) in FIG. 6. For details, refer to the foregoing descriptions. Details are not described herein again.

In some embodiments, the map in the map database includes two different types of map data, a positioning manner corresponding to one type of map data is a first basic positioning manner, and a positioning manner corresponding to the other type of map data is a second basic positioning manner. For example, the first basic positioning manner may be the "GVPS" solution described above, and the second basic positioning manner may be the "LoD-VPS" solution described above.

The positioning the target image in the target positioning manner may be: first, positioning the target image in the first basic positioning manner, to obtain a first 6DOF of the target image. Then, an image at a first 6DOF viewing angle is rendered by using model data in the map database, to obtain a first first textureless image corresponding to the target image. Then, the target image is processed in a preset processing manner in the second basic positioning manner, to obtain a second textureless image corresponding to the target image, where the preset processing manner includes at least one of semantic segmentation, instance segmentation, and depth estimation. Finally, when a target parameter between the first textureless image and the second textureless image falls within a preset range, it is determined that the 6DOF of the target image is the first 6DOF. For example, the target parameter may include a loss function (loss function) between the first textureless image and the second textureless image. The loss function may include one or more of a semantic intersection over union, an instance intersection over union, a contour line distance, a depth error, or the like. This positioning manner may be understood as a positioning manner in which the "GVPS" is used as a main solution in the "cross-validation positioning" described above, that is, the solution shown in (B) in FIG. 6. For details, refer to the foregoing descriptions. Details are not described herein again.

In some embodiments, the map in the map database includes two different types of map data, a positioning manner corresponding to one type of map data is a first basic positioning manner, and a positioning manner corresponding to the other type of map data is a second basic positioning manner. For example, the first basic positioning manner may be the "LoD-VPS" solution described above, and the second basic positioning manner may be the "GVPS" solution described above.

The positioning the target image in the target positioning manner may be: first, processing the target image in the first basic positioning manner, to obtain point cloud data of the target image. Then, the target image is processed in the second basic positioning manner, to obtain an image that is in the map database and that is most similar to the target image. Then, data that is in the map database and that matches the point cloud data is determined. Finally, a first algorithm is used to process the image that is most similar to the target image and the data that matches the point cloud data, to obtain the 6DOF of the target image. This positioning manner may be understood as the "multi-type loss fusion positioning" solution described above, that is, the solution shown in FIG. 7. For details, refer to the foregoing descriptions. Details are not described herein again.

In some embodiments, the map in the map database includes two different types of map data, a positioning manner corresponding to one type of map data is a first basic positioning manner, and a positioning manner corresponding to the other type of map data is a second basic positioning manner. For example, the first basic positioning manner may be the "LoD-VPS" solution described above, and the second basic positioning manner may be the "GVPS" solution described above.

The positioning the target image in the target positioning manner may be: first, positioning the target image in the first basic positioning manner, to obtain a first 6DOF of the target image. Then, the target image is processed in the second basic positioning manner based on a location 3DOF and an orientation angle that are in the first 6DOF, to obtain an image that is in the map database and that is similar to the target image. Finally, the image similar to the target image is processed by using a first algorithm based on a posture 3DOF in the first 6DOF, to obtain the 6DOF of the target image. This positioning manner may be understood as the "rotation-translation separation estimation" solution described above, that is, the solution shown in FIG. 8. For details, refer to the foregoing descriptions. Details are not described herein again. For example, the first algorithm may be a PNP/BA algorithm.

In some embodiments, after a quantity of target images included in the image data reaches a preset quantity, the map may be further upgraded/updated. When the map is upgraded/updated, it may be first determined that the quantity of images included in the image data reaches the preset quantity. Then, each image in the image data is positioned to obtain pose information of at least a part of images in the image data. Then, a correspondence between a 2D feature and a 3D feature that are of each image in the image data is determined from the map database based on the pose information of the at least a part of images in the image data. Then, matching is performed, in the map database, on the at least a part of images based on the pose information of the at least a part of images in the image data, to obtain an image that has a co-view relationship with each of the at least a part of images. Then, for an image whose pose information is not obtained in the image data, retrieval is performed in the map database to obtain an image similar to the image whose pose information is not obtained, and 2D feature matching is performed on the obtained image and the image whose pose information is not obtained, to obtain an image that has a co-view relationship with the image whose pose information is not obtained. Then, for the image whose pose information is not obtained, the pose information of the image whose pose information is not obtained is obtained by using pose information of the image that has a co-view relationship with the image whose pose information is not obtained. Finally, the pose and the 3D feature of the image whose pose information is obtained are optimized to complete the map upgrade/update. A map upgrade/update process may be the "map upgrade and/or update" manner described above, that is, the solution described in FIG. 2. For details, refer to the foregoing descriptions. Details are not described herein again.

In addition, after the pose and the 3D feature of the image whose pose information is obtained are optimized, existing point cloud data in at least a part of areas on the map in the map database may be further read as a target point cloud, a 3D feature corresponding to a constructed image in the image data is used as a source point cloud, and point cloud registration is performed. Coordinates of a 3D feature corresponding to a remaining 2D feature in an image that has pose information in the image data is determined, and the image that has the pose information in the image data and a target parameter of the image that has the pose information in the image data are stored into the map database, where the target parameter includes at least one of a global feature, pose information, a 2D feature, and a 3D feature.

It may be understood that sequence numbers of the processes do not mean execution sequences in the foregoing embodiments. The execution sequences of the processes should be determined according to functions and internal logic of the processes, and should not be construed as any limitation on the implementation processes of embodiments of this application. In addition, in some possible implementations, the steps in the foregoing embodiments may be selectively performed according to an actual situation, or may be partially performed, or may be completely performed. This is not limited herein. In addition, all or a part of any feature of any embodiment of this application may be freely combined in any manner without a conflict. A combined technical solution also falls within the scope of this application.

Based on the method described in the foregoing embodiment, an embodiment of this application further provides an electronic device. The electronic device may include: at least one memory, configured to store a program; and at least one processor, configured to execute the program stored in the memory. When the program stored in the memory is executed, the processor is configured to perform the method described in the foregoing embodiments.

It should be understood that steps in the foregoing method embodiments may be implemented by using a logic circuit in a form of hardware or instructions in a form of software in the processor.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a special-purpose computer, a computer network, or other programmable apparatuses. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

**Claims**

1. A fusion positioning method based on a multi-type map, wherein the method comprises:

   obtaining a target image to be positioned;
   obtaining a target location at which the target image is photographed;
   determining, in a map database, target map quality of a map located at the target location, wherein the map in the map database comprises a plurality of different types of map data, and each type of map data is corresponding to one basic positioning manner;
   determining a target positioning manner from a plurality of different preset positioning manners based on the target map quality, wherein the target positioning manner comprises a basic positioning manner corresponding to each piece of map data comprised in the map database;
   positioning the target image in the target positioning manner, to obtain a 6 degree of freedom (6DOF) of the target image; and
   outputting the 6DOF of the target image.

2. The method according to claim 1, wherein the map in the map database comprises two different types of map data, a positioning manner corresponding to one type of map data is a first basic positioning manner, and a positioning manner corresponding to the other type of map data is a second basic positioning manner; and
   the positioning the target image in the target positioning manner specifically comprises:

   positioning the target image in the first basic positioning manner, to obtain a first 6DOF of the target image;
   extracting a 2D feature of the target image and a descriptor of the 2D feature in the second basic positioning manner;
   determining, based on the first 6DOF, the map data in the map database, and the 2D feature of the target image and the descriptor of the 2D feature, a 3D feature that is in the map database and that matches the 2D feature of the target image; and
   determining the 6DOF of the target image based on the 2D feature of the target image, the 3D feature that matches the 2D feature of the target image, and historical image data, wherein the historical image data comprises historical data of an image existing before the target image is obtained, and the historical data comprises a 6DOF, a 2D feature, and a 3D feature of the image.

3. The method according to claim 1, wherein the map in the map database comprises two different types of map data, a positioning manner corresponding to one type of map data is a first basic positioning manner, and a positioning manner corresponding to the other type of map data is a second basic positioning manner; and
   the positioning the target image in the target positioning manner specifically comprises:

positioning the target image in the first basic positioning manner, to obtain a first 6DOF of the target image;

performing feature extraction on the target image in the second basic positioning manner, to obtain a global feature and a local feature that are of the target image;

performing retrieval in the map data in the map database by using the global feature of the target image and the first 6DOF, to obtain an image similar to the target image;

processing the local feature of the target image and the image similar to the target image to obtain a quantity of interior points or a projection error between the target image and the image similar to the target image; and

when a proportion of the quantity of interior points is greater than a preset proportion, or the projection error falls within a preset range, determining that the 6DOF of the target image is the first 6DOF.

4. The method according to claim 1, wherein the map in the map database comprises two different types of map data, a positioning manner corresponding to one type of map data is a first basic positioning manner, and a positioning manner corresponding to the other type of map data is a second basic positioning manner; and

the positioning the target image in the target positioning manner specifically comprises:

positioning the target image in the first basic positioning manner, to obtain a first 6DOF of the target image;

rendering an image at a first 6DOF viewing angle by using model data in the map database, to obtain a first textureless image corresponding to the target image;

processing the target image in a preset processing manner in the second basic positioning manner, to obtain a second textureless image corresponding to the target image, wherein the preset processing manner comprises at least one of semantic segmentation, instance segmentation, and depth estimation; and

when a target parameter between the first textureless image and the second textureless image falls within a preset range, determining that the 6DOF of the target image is the first 6DOF.

5. The method according to claim 1, wherein the map in the map database comprises two different types of map data, a positioning manner corresponding to one type of map data is a first basic positioning manner, and a positioning manner corresponding to the other type of map data is a second basic positioning manner; and

the positioning the target image in the target positioning manner specifically comprises:

processing the target image in the first basic positioning manner, to obtain point cloud data of the target image;

processing the target image in the second basic positioning manner, to obtain an image that is in the map database and that is most similar to the target image;

determining data that is in the map database and that matches the point cloud data; and

processing, by using a first algorithm, the image that is most similar to the target image and the data that matches the point cloud data, to obtain the 6DOF of the target image.

6. The method according to claim 1, wherein the map in the map database comprises two different types of map data, a positioning manner corresponding to one type of map data is a first basic positioning manner, and a positioning manner corresponding to the other type of map data is a second basic positioning manner; and

the positioning the target image in the target positioning manner specifically comprises:

positioning the target image in the first basic positioning manner to obtain the first 6DOF of the target image;

processing the target image in the second basic positioning manner based on a location 3DOF and an orientation angle that are in the first 6DOF, to obtain an image that is in the map database and that is similar to the target image; and

processing the image similar to the target image by using a first algorithm based on a posture 3DOF in the first 6DOF, to obtain the 6DOF of the target image.

7. The method according to any one of claims 1 to 6, wherein the method further comprises:

determining that a quantity of images comprised in image data reaches a preset quantity;

positioning each image in the image data to obtain pose information of at least a part of images in the image data;

determining, from the map database, a correspondence between a 2D feature and a 3D feature that are of each image in the image data based on the pose information of the at least a part of images in the image data;

performing, in the map database, matching on the at least a part of images based on the pose information of the at least a part of images in the image data, to obtain an image that has a co-view relationship with each of the at least a part of images;

for an image whose pose information is not obtained in the image data, performing retrieval in the map database to obtain an image similar to the image whose pose information is not obtained, and performing 2D feature matching on the obtained image and the image whose pose information is not obtained, to obtain an image that has a co-view relationship with the image whose pose information is not obtained;

for the image whose pose information is not obtained, obtaining, by using pose information of the image that has a co-view relationship with the image whose pose information is not obtained, the pose information of the image whose pose information is not obtained; and

optimizing a pose and a 3D feature that are of an image whose pose information is obtained.

8. The method according to claim 7, wherein the method further comprises:

reading existing point cloud data in at least a part of areas on the map in the map database, using the point cloud data as a target point cloud, using a 3D feature corresponding to a constructed image in the image data as a source point cloud, and performing point cloud registration; and

determining coordinates of a 3D feature corresponding to a remaining 2D feature in an image that has pose information and that is in the image data, and storing the image that has the pose information and that is in the image data, and a target parameter of the image that has the pose information into the map database, wherein the target parameter comprises at least one of a global feature, pose information, a 2D feature, and a 3D feature.

9. A map upgrade/update method, wherein the method further comprises:

determining that a quantity of images comprised in image data reaches a preset quantity;

positioning each image in the image data to obtain pose information of at least a part of images in the image data;

determining, from the map database, a correspondence between a 2D feature and a 3D feature that are of each image in the image data based on the pose information of the at least a part of images in the image data;

performing, in the map database, matching on the at least a part of images based on the pose information of the at least a part of images in the image data, to obtain an image that has a co-view relationship with each of the at least a part of images;

for an image whose pose information is not obtained in the image data, performing retrieval in the map database to obtain an image similar to the image whose pose information is not obtained, and performing 2D feature matching on the obtained image and the image whose pose information is not obtained, to obtain an image that has a co-view relationship with the image whose pose information is not obtained;

for the image whose pose information is not obtained, obtaining, by using pose information of the image that has a co-view relationship with the image whose pose information is not obtained, the pose information of the image whose pose information is not obtained; and

optimizing a pose and a 3D feature that are of an image whose pose information is obtained.

10. The method according to claim 9, wherein the method further comprises:

reading existing point cloud data in at least a part of areas on the map in the map database, using the point cloud data as a target point cloud, using a 3D feature corresponding to a constructed image in the image data as a source point cloud, and performing point cloud registration; and

determining coordinates of a 3D feature corresponding to a remaining 2D feature in an image that has pose information and that is in the image data, and storing the image that has the pose information and that is in the image data, and a target parameter of the image that has the pose information into the map database, wherein the target parameter comprises at least one of a global feature, pose information, a 2D feature, and a 3D feature.

11. An electronic device, comprising:

at least one memory, configured to store a program; and

at least one processor, configured to execute the program stored in the memory, wherein when the program stored in the memory is executed, the processor is configured to perform the method according to any one of claims 1 to 10.

12. A computer-readable storage medium, wherein the computer-readable storage medium stores a computer program, and when the computer program runs on an electronic device, the electronic device is enabled to perform the method according to any one of claims 1 to 10.

**13.** A computer program product, wherein when the computer program product runs on an electronic device, the electronic device is enabled to perform the method according to any one of claims 1 to 10.

FIG. 1

Original map data uploaded by an administrator

Image uploaded by a user and related information

Map construction service

Positioning service

Map data management service

3D feature point/line

Rendered image/Semantic map

Building model

...

Temporary data

Map data uploaded by the administrator

Perform visual positioning on each image in image data by using an existing positioning solution, to obtain pose information of at least a part of images   S201

Construct a correspondence between a 2D feature and a 3D feature that are of each image in the image data   S202

Perform matching on descriptors of 2D features between images in the image data, and construct 2D-2D matching between images having a co-view relationship   S203

Optimize a pose of an image whose pose information is obtained and initial coordinates of the 3D feature, to minimize a reprojection error   S204

For images whose pose information is not obtained but that have a co-view relationship, obtain initial poses of the images whose pose information is not obtained but that have a co-view relationship   S205

Repeat S204 and S205 until none of remaining images can be registered   S206

Read existing models or point cloud data in at least a part of areas in a map, use the models or the point cloud data as a target point cloud, use a constructed 3D feature as a source point cloud, and perform point cloud registration   S207

Determine coordinates of a 3D feature corresponding to a remaining 2D feature in an image that has pose information, and store the image, a global feature, the pose information, the 2D feature, and the 3D feature into a database   S208

FIG. 2

FIG. 3

FIG. 4

FIG. 5

(A)

(B)

FIG. 6

Semantic
data

To-be-
positioned
picture → Semantic
segmentation → Point cloud
correction → Search +
ICP + PNP → 6DOF

Local feature → Feature
matching

Global
feature → Feature
retrieval

Map data

FIG. 7

Semantic
data

To-be-
positioned
picture → Semantic
segmentation → Point cloud
correction → Search + ICP → Posture
3DOF

Location 3DOF +
Orientation angle

Local feature → Feature
matching → PNP/BA → 6DOF

Global
feature → Feature
retrieval

Map data

FIG. 8

S901

Obtain a target image to be positioned

S902

Obtain a target location at which the target image is photographed

S903

Determine, in a map database, target map quality of a map located at the target location, where the map in the map database includes a plurality of different types of map data, and each type of map data is corresponding to one basic positioning manner

S904

Determine a target positioning manner from a plurality of different preset positioning manners based on the target map quality, where the target positioning manner includes a basic positioning manner corresponding to each piece of map data included in the map database

S905

Position the target image in the target positioning manner, to obtain a 6 degree of freedom (6DOF) of the target image

S906

Output the 6DOF of the target image

FIG. 9

## INTERNATIONAL SEARCH REPORT

| International application No. |
|---|
| **PCT/CN2022/133941** |

### A. CLASSIFICATION OF SUBJECT MATTER

G06T 17/05(2011.01)i

According to International Patent Classification (IPC) or to both national classification and IPC

### B. FIELDS SEARCHED

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

DWPI, CNTXT, ENTXT, ENTXTC, CNKI: 全球定位系统, 多类型, 地图, 融合定位, 目标图像, 目标位置, 数据库, 基础定位, 目标定位, 6自由度位姿, GPS, multiple types, map, converged position, target image, target position, database, base position, target position, 6 degree of freedom, 6DOF

### C. DOCUMENTS CONSIDERED TO BE RELEVANT

| Category* | Citation of document, with indication, where appropriate, of the relevant passages | Relevant to claim No. |
|---|---|---|
| Y | CN 103823901 A (LENOVO (BEIJING) CO., LTD.) 28 May 2014 (2014-05-28) description, paragraphs [0040]-[0081] | 1-8, 11-13 |
| Y | CN 113503883 A (BEIJING SANKUAI ONLINE TECHNOLOGY CO., LTD.) 15 October 2021 (2021-10-15) description, paragraphs [0099]-[0109] | 1-8, 11-13 |
| A | US 2020272833 A1 (TUSIMPLE, INC.) 27 August 2020 (2020-08-27) entire description | 1-13 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **2023-01-28** | **07 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

<div align="center">

**INTERNATIONAL SEARCH REPORT**
**Information on patent family members**

</div>

| International application No. |
|---|
| **PCT/CN2022/133941** |

| Patent document cited in search report | | | Publication date (day/month/year) | Patent family member(s) | | | Publication date (day/month/year) |
|---|---|---|---|---|---|---|---|
| CN | 103823901 | A | 28 May 2014 | None | | | |
| CN | 113503883 | A | 15 October 2021 | CN | 113503883 | B | 19 July 2022 |
| US | 2020272833 | A1 | 27 August 2020 | US | 1170230 | B2 | 09 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111584656